# EUROPÄISCHE PATENTSCHRIFT

(11) **EP 1 928 937 B1**
(45) Veröffentlichungstag und Bekanntmachung des Hinweises auf die Patenterteilung: **06.05.2009**
(21) Anmeldenummer: 06776917.4
(22) Anmeldetag: 17.08.2006
(51) Int. Cl.: C08J 3/28, C08G 63/46

(54) **VERFAHREN ZUR HERSTELLUNG VON POLYESTERPOLYOLEN UND DEREN VERWENDUNG**
PROCESS FOR PREPARING POLYESTER POLYOLS AND THEIR USE
PROCEDE POUR PRODUIRE DES POLYOLS DE POLYESTER ET LEUR UTILISATION

(30) Priorität: 27.08.2005 DE 102005040617
(43) Veröffentlichungstag der Anmeldung: 11.06.2008
(73) Patentinhaber: Bayer MaterialScience AG, 51368 Leverkusen (DE)
(72) Erfinder: NEFZGER, Hartmut, 50259 Pulheim (DE); HANNIG, Frithjof, 40593 Düsseldorf (DE); NORDMANN, Peter, 41539 Dormagen (DE)
(86) Internationale Anmeldenummer: PCT/EP2006/008113
(87) Internationale Veröffentlichungsnummer: WO 2007/025649

(56) Entgegenhaltungen:
- GB-A- 2 061 130
- US-A- 3 666 724
- US-A1- 2005 096 482

## Beschreibung

Die vorliegende Erfindung betrifft ein Verfahren zur Herstellung von Polyesterpolyolen durch Alkoholyse höhermolekularer Polyesterpolyole mittels Mikrowellenstrahlung.

Polyesterpolyole sind wertvolle Rohstoffe für die Polyurethanchemie und werden als Weichsegmentbausteine bei der Herstellung von geschäumten und nicht geschäumten Polyurethan(PUR)-Werkstoffen großtechnisch breit eingesetzt.

Ihre Aufbaukomponenten sind meist aliphatische und/oder aromatische Polycarbonsäuren, ggf. auch in Form ihrer niedermolekularen Ester mit monofunktionellen Alkoholen und/oder auch in Form ihrer Anhydride, einschließlich der Kohlensäure und deren niedermolekulare Derivate, sowie Polyole mit Molekulargewichten von 62 bis 1000, bevorzugt 62 bis 400 g/mol. Diese Polyole können einzeln oder im Gemisch verwendet werden. In speziellen Fällen können selbstverständlich auch längerkettige Polyetherpolyole, wie sie z.B. in Kap. 3.1.1. (Seite 58 ff.) des Kunststoffhandbuches "Polyurethane", 3. Auflage, beschrieben sind, mit Molekulargewichten von mehr als 1000 g/mol anteilig mitverwendet werden. Die Funktionalität sowohl der Polycarbonsäure- als auch der Polyoleinzelkomponenten liegt hierbei meist bei 2. Zur Einstellung von speziellen Eigenschaften können jedoch auch solche Komponenten mitverwendet werden, die Funktionalitäten ungleich 2, also z.B. 1, 3, 4 usw. aufweisen.

Die Polyesterpolyole weisen ihrerseits Funktionalitäten von 1,7 bis 4,5, bevorzugt 1,90 bis 3,5 auf. Ihre zahlenmittlere Molmasse beträgt je nach Anwendung 200 bis 6000 g/mol, ihre Konsistenz kann je nach Zusammensetzung von amorph über teilkristallin bis hin zu höherkristallin reichen.

Der technisch wichtigste Herstellungsweg für Polyesterpolyole ist die Polykondensation von Polycarbonsäuren mit Polyolen unter Abspaltung von Wasser. Sie kann sowohl katalysiert als auch unkatalysiert dadurch erfolgen, daß die Komponenten bei erhöhter Temperatur von 150 bis 250°C bei Normaldruck oder vorzugsweise im Vakuum von 100 mbar bis 0,1 mbar zur Umsetzung gebracht werden. Weiterhin können derartige Polykondensationen auch mit Hilfe eines Schleppmittels, z.B. Toluol, ausgeführt werden.

Polyesterpolyole, die sich von der Kohlensäure ableiten, werden dagegen durch Polykondensationsreaktion von beispielsweise Diphenylcarbonat, Dimethylcarbonat oder Phosgen unter Abspaltung von Phenol, Methanol oder Salzsäure, wobei ebenfalls Katalysatoren zum Einsatz kommen können, hergestellt.

Das stöchiometrische Verhältnis von Carboxylgruppen zu Hydroxylgruppen in Kombination mit der zahlenmittleren Funktionalität dieser Aufbaukomponenten bestimmt in der dem Fachmann bekannten Weise die Molmasse und die Funktionalität des Polyesterpolyols. Polyesterpolyole, die im Bereich Polyurethane Anwendung finden, weisen im Allgemeinen Säurezahlen von unter 3,5 mg KOH/g, bevorzugt unter 3 mg KOH/g auf.

In der technischen Praxis tritt häufig das Problem auf, dass nach weitgehend beendeter Polykondensationsreaktion zwar die Säurezahl im oben beschriebenen Bereich liegt, die zugehörige OH-Zahl jedoch unterhalb der anvisierten Größe liegt. Derartige Polyesterpolyole weisen bezüglich der Umsetzung an Carboxylgruppen Werte von nahezu 100% auf und müssen daher durch Zusatz von weiterem Polyol bezüglich der Zielgröße OH-Zahl nachgebessert werden. Diese Nachbesserung erfolgt in der Art, daß die vorberechnete Menge an Polyol zudosiert wird und über einen längeren Zeitraum, z.B. 4 - 10 Stunden, bei erhöhter Temperatur, z.B. 180 - 250°C eingeestert, d.h. äquilibriert wird. Chemisch handelt es sich hierbei um eine Alkoholysereaktion. Diese Alkoholysereaktion ist nicht notwendig, um die OH-Zahl auf Zielwert zu bringen, da sie bereits durch Verrühren des Polyols mit dem nachzubessernden Polyesterpolyol erreicht ist, sondern vielmehr um die Verteilung der einzelnen Oligomeren des Polyesterpolyols ins Polyestergleichgewicht entsprechend der Flory-Oligomeren-Verteilungsfunktion zu bringen (P.J. Flory, Principles of Polymer Chemstry, Cornell University Press, Ithaca 1953, S. 317 ff.). Ein Verzicht auf die Alkoholysereaktion bedeutet, dass ein nachgebessertes, aber nicht äquilibriertes Polyesterpolyol einen zu hohen unerwünschten Anteil an freiem, niedermolekularem, unverestertem Polyol aufweist. Dies wiederum führt zu veränderten Werkstoffeigenschaften der daraus hergestellten Polyurethane. Beispielsweise wird die Glasübergangstemperatur der Weichsegmentdomänen und damit die Härte der Werkstoffe in Folge unterschiedlichen Anteils an Hartsegmentdomänen verändert. Da die Menge des nachzudosierenden Polyols von Partie zu Partie normalerweise unterschiedlich ist, ist somit die Reproduzierbarkeit der Materialeigenschaften der Polyurethane nicht gewährleistet. Dies sind im Wesentlichen die Gründe, weshalb auf den zusätzlichen Äquilibrierungsschritt nicht verzichtet werden kann, obwohl er kostenintensiv und zeitaufwändig und somit unerwünscht ist.

Die Ursachen für die Notwendigkeit, kurzkettiges Polyol nachzudosieren, können sein: Unterdosierung von Polyol bzw. Überdosierung von Polycarbonsäure. Diese Ursache kann durch technische Maßnahmen weitgehend ausgeschlossen werden. Nicht reproduzierbar vorhersagen lässt sich dagegen das Ausmaß von Nebenreaktionen, die dazu führen, dass z.B. aus Diethylenglykol Dioxan, aus 1,4,-Butandiol Tetrahydrofuran oder aus 1,6-Hexandiol Oxepan entsteht. Das Ausmaß dieser Zyklisierungsreaktionen hängt in kritischer Weise von der Reaktionsführung, also insbesondere der Reaktionstemperatur, von Typ und Menge der verwendeten Veresterungskatalysatoren sowie von Verunreinigungen, die z.B. durch das Vorprodukt in die Reaktion eingetragen werden, ab.

Derartige Unwägbarkeiten führen zu im Ausmaß nicht vorhersehbaren Ringetherbildung, die, wie dargelegt, durch Nachdosierung und Äquilibrierung von Polyol, möglichst bis zum Flory-Oligomerengleichgewicht, ausgeglichen werden müssen.

Im Florygleichgewichf befindliche Polyesterpolyole eines vorgegebenen Typs weisen immer die gleiche Oligomeren-Verteilung auf und ergeben somit konsistente Materialeigenschaften der daraus hergestellten PUR-Werkstoffe.

Aufgabe der vorliegenden Erfindung war es daher, Polyesterpolyolgemische im Florygleichgewicht zur Verfügung zu stellen bzw. ein zeitsparendes, einfaches Verfahren zu deren Herstellung, wobei die Verfahrenstemperatur zur Erzielung eines Polyesterpolyolgemisches im Florygleichgewicht möglichst niedrig ist.

Die vorgenannte Aufgaben konnte überraschenderweise mit Hilfe von Mikrowellenstrahlung vorteilhaft gelöst werden.

Gegenstand der Erfindung ist daher ein Verfahren zur Herstellung von Polyesterpolyolen (A) durch Alkoholyse, dadurch gekennzeichnet, dass
a) Polyesterpolyole (B), deren zahlenmittleres Molekulargewicht größer ist als das des Polyesterpolyols (A), mit Polyolen (C) mit Molekulargewichten von 62 bis 1000, bevorzugt 62 bis 400 g/mol vermischt werden, wobei die Polyesterpolyole (B) verschieden von den Polyolen (C) sind, und
b) diese Mischung einer Mikrowellenstrahlung ausgesetzt wird.

Unter Mikrowellenstrahlung wird in diesem Zusammenhang der Frequenzbereich von 300 MHz bis 300 GHz bzw. der Wellenlängenbereich von 1 m bis 1 mm verstanden (Römpp, Chemie Lexikon, Thieme Verlag, 9. erw. und neubearbeitete Aufl., 1995, S. 2785).

Geeignete Polyesterpolyole (B) haben typischerweise mittlere Molekulargewichte von 200 bis 6000 g/mol und Funktionalitäten von 1,9 bis 4,5, bevorzugt 1,95 bis 3,5. Sie sind vorzugsweise Reaktionsprodukte von Polycarbonsäuren mit Polyolen.

Bevorzugt werden als Komponente (C) Polyole ohne Estergruppen eingesetzt. Die Funktionalitäten liegen zwischen 1 und 4, bevorzugt 2. Das Molekulargewicht der Polyole (C) ist niedriger als das Molekulargewicht der Polyesterpolyole (B).

In der Literatur werden zwar zahlreiche Synthesen zur Herstellung niedermolekularer Verbindungen mittels Mikrowellenstrahlung in Lösungsmitteln beschrieben, jedoch gibt es hier keine Hinweise auf die Herstellung von Polyesterpolyolen, zumal eine Herstellung in Lösungsmitteln auch nicht in Betracht käme (B.L. Hayes, Microwave Synthesis, Chemstry at the Speed of Light, CEM Publishing, Matthews, NC 28105, S. 77 - 156).

Überraschenderweise wurde gefunden, dass Mikrowellenstrahlen die Alkoholyse von Polyesterpolyolen deutlich beschleunigen und dies bereits bei sehr niedrigen Temperaturen.

Als handelsübliche Mikrowellengeräte stehen sowohl Mono-Mode- als auch Multi-Mode-Geräte zur Verfügung. Je nach Ausführungsform lassen sich Energieeinträge zwischen 10 W und mehreren 100 W realisieren. Selbstverständlich kann bei Bedarf auch mit weniger oder mehr Energieeintrag gearbeitet werden.

In einem typischen Versuchsaufbau kann beispielsweise das kommerziell erhältliche Mono-Mode-Mikrowellengerät "Discover" der Firma CEM eingesetzt werden (Frequenz 2,45 GHz). In den nachfolgend näher beschriebenen Versuchen wurde ein 100 ml Reaktionsgefäß verwendet. Das Gerät der Firma CEM zeichnet sich u.a. dadurch aus, dass es eine für Mikrowellengeräte vergleichsweise hohe Energiedichte erzeugen kann, die zudem durch die Möglichkeit der gleichzeitigen Kühlung über längere Zeit aufrecht erhalten werden kann. Die Temperaturbelastung für das Reaktionsgemisch kann ebenfalls sehr niedrig gehalten werden.

Bevorzugt sind Energiedichten von mehr als 200 Watt/Liter. Bevorzugt ist weiterhin die Einstrahlung der Mikrowellenenergie unter gleichzeitiger Kühlung des Reaktionsgemisches, so dass trotz hohen Energieeintrages nur eine vergleichsweise niedrige Reaktionstemperatur erreicht wird. Vorzugsweise wird zur Kühlung Druckluft verwendet; es können jedoch auch andere Kühlsysteme, insbesondere solche mit einem flüssigen Kühlmedium verwendet werden.

Selbstverständlich ist der Einsatz von Mikrowellengeräten nicht auf Mono-Mode-Geräte beschränkt, sondern es können auch die bereits oben beschriebenen Multi-Mode-Geräte verwendet werden. Multi-mode Geräte sind mit den allgemein bekannten Haushaltsgeräten vergleichbar und weisen inhomogene Mikrowellenfelder auf, d.h. es kommt aufgrund dieser unregelmäßigen Mikrowellenverteilung zu sogenannten Hot- und Coldspots innerhalb der Mikrowellenkammer, was durch Rotation des Mikrowellentellers weitgehend ausgeglichen wird.

Mono-mode Geräte besitzen dagegen ein homogenes Mikrowellenfeld und weisen infolge eines speziellen Kammerdesigns keine derartigen Hot- und Coldspots auf.

Das erfindungsgemäße Verfahren kann nicht nur batchweise, sondern durch Verwendung einer Pumpe und geeigneten Rohrreaktoren auch kontinuierlich durchgeführt werden. Es können auch mehrere Mikrowellengeräte in Reihe oder parallel geschaltet werden.

Die Alkoholysereaktion der Polyesterpolyole mittels Mikrowellenstrahlung kann darüber hinaus durch Zusatz von Katalysatoren beschleunigt werden; bevorzugt ist jedoch die Reaktion ohne Katalysator.

Das Verfahren kann auch unter erhöhtem oder vermindertem Druck durchgeführt werden. Letzteres ist insbesondere dann von Vorteil, wenn zusätzlich zur Alkoholyse, z.B. auch eine Verringerung der Säurezahl erfolgen soll, also geringe Mengen z.B. an Wasser aus dem Reaktionsgemisch ausgetragen werden müssen.

Das Verfahren unter erhöhtem Druck durchzuführen, kommt in solchen Fällen in Betracht, bei denen der Siedepunkt einer der Reaktionskomponenten unterhalb der (z.B. durch andere Randbedingungen vorgegebenen) Reaktionstemperatur im Verfahren liegt.

Bevorzugt wird das Verfahren ohne die Verwendung eines Lösungsmittels durchgeführt. In speziellen Fällen, z.B. bei Polyesterpolyolen mit sehr hohem Molekulargewicht und/oder entsprechend hoher Viskosität kann gegebenenfalls ein Lösungsmittel mitverwendet werden.

Die Erfindung soll anhand der nachfolgenden Beispiele näher erläutert werden.

### Beispiele

### Vergleichsbeispiel:

In einem 4 1-Vierhalskolben mit Rührer, Thermometer und Rückflußkühler wurden 1500 g eines Polybutylenadipats mit einer Hydroxylzahl von 50 mg KOH/g und einer Säurezahl von 0,4 mg KOH/g bei 70°C mit 30 g Butandiol-1,4 rasch verrührt. Man entnahm eine Probe ("Nullwert-Probe") und steigerte danach die Reaktionstemperatur auf 200°C. Bei dieser Temperatur wurden nach 1, 2, 4 und 8 Stunden weitere Proben zur gaschromatographischen Analyse entnommen.

| Reaktionszeit | Freies Butandiol |
|---|---|
| [Std] | [Gew.-%] |
| 0 | 2,6 |
| 1 | 2,3 |
| 2 | 1,9 |
| 4 | 1,6 |
| 8 | 1,5 |

Theoretischer Wert bei vollständiger Einesterung: 0,8 Gew.-%.

Das Vergleichsbeispiel zeigt, dass selbst 8 Stunden bei 200°C nicht ausreichen, um das Flory-Äquilibrierungsgewicht zu erreichen.

### Beispiel 1 (erfindungsgemäß):

In einem 100 ml Einhalsglaskolben wurden 100 g eines Polybutylenadipats mit einer Hydroxylzahl von 50 mg KOH/g und einer Säurezahl von 0,4 mg KOH/g bei 70°C mit 2 g Butandiol-1,4 rasch verrührt. Diese Mischung wurde anschließend in einem Mono-Mode Mikrowellengerät der Fa. CEM (Discover) einer Mikrowellenstrahlung ausgesetzt, wobei folgende Reaktionsbedingungen eingestellt wurden: Reaktionszeit: 2 Std., konstanter Mikrowellenenergieeintrag von 300 W unter kontinuierlicher Kühlung mit Druckluft. Die von einem Infrarot-Sensor ermittelte maximale Reaktionstemperatur betrug 89°C.

Die Reaktionsmischung wurde anschließend mittels Gaschromatographie auf den Anteil an freiem Butandiol untersucht. Man fand 1,0 Gew.% freies Butandiol; Theorie ca. 0,8 %.

Der Wert der Nullwert-Probe lag bei 2,6 Gew.% freies Butandiol (Theorie: 2,4%).

Der Vergleich der Versuche zeigt, dass das Flory-Äquilibrierungsgewicht im erfindungsgemäßen Verfahren nach nur 2 Std. bei niedriger Temperatur (ca. 90°C anstelle von 200°C im Vergleichstest) praktisch erreicht ist.

## Patentansprüche

1. Verfahren zur Herstellung von Polyesterpolyolen (A), **dadurch gekennzeichnet, dass**
a) Polyesterpolyole (B), deren zahlenmittleres Molekulargewicht größer ist als das des Polyesterpolyols (A), mit Polyolen (C) mit Molekulargewichten von 62 bis 1000, bevorzugt 62 bis 400 g/mol vermischt werden, wobei die Polyesterpolyole (B) verschieden von den Polyolen (C) sind, und
b) diese Mischung einer Mikrowellenstrahlung ausgesetzt wird.

2. Verfahren nach Anspruch 1, **dadurch gekennzeichnet, dass** monomodale Mikrowellenstrahlung mit homogenen Mikrowellenstrahlungsfeldem verwendet wird.

3. Verfahren nach Anspruch 1, **dadurch gekennzeichnet, dass** multimodale Mikrowellenstrahlung mit heterogenen Mikrowellenstrahlungsfeldern verwendet wird.

4. Verfahren nach Anspruch 1, **dadurch gekennzeichnet, dass** der Energieeintrag der Mikrowellenstrahlung mindestens 10 W/l beträgt.

5. Verfahren nach Anspruch 1, **dadurch gekennzeichnet, dass** der Energieeintrag der Mikrowellenstrahlung mindestens 50 W/l beträgt.

6. Verfahren nach Anspruch 1, **dadurch gekennzeichnet, dass** der Energieeintrag der Mikrowellenstrahlung bevorzugt mehr als 200 W/l beträgt.

7. Verfahren nach Anspruch 1, **dadurch gekennzeichnet, dass** die Polyesterpolyole (B) aus aliphatischen und/oder aromatischen Polycarbonsäureeinheiten und aliphatischen, araliphatischen und/oder cycloaliphatischen Polyolen, ggf. Polyolgemischen mit Molekulargewichten von 62 bis 1000, bevorzugt 62 bis 400 g/mol aufgebaut sind.

8. Verfahren nach Anspruche 1, **dadurch gekennzeichnet, dass** die Polyesterpolyole (B) zahlenmittlere Molekulargewichte von 200 bis 6000 g/mol und Funktionalitäten von 1,9 bis 4,5, bevorzugt 1,95 bis 3,5 aufweisen.

9. Verfahren nach Anspruch 1, **dadurch gekennzeichnet, dass** die Polyesterpolyole (B) Carbonatgruppen enthalten.

10. Verfahren zur Herstellung von geschäumten und nicht geschäumten Polyurethan-Werkstoffen unter Verwendung der nach dem Verfahren gemäß Ansprüchen 1 bis 9 hergestellten Polyesterpolyole (A).

## Claims

1. Process for the preparation of polyesterpolyols (A), **characterized in that**
a) polyesterpolyols (B), whose number-average molecular weight is greater than that of the polyesterpolyol (A), are mixed with polyols (C) with molecular weights of 62 to 1000 and preferably of 62 to 400 g/mol, the polyesterpolyols (B) being different from the polyols (C), and
b) this mixture is exposed to microwave radiation.

2. Process according to Claim 1, **characterized in that** monomodal microwave radiation with homogeneous microwave radiation fields is used.

3. Process according to Claim 1, **characterized in that** multimodal microwave radiation with heterogeneous microwave radiation fields is used.

4. Process according to Claim 1, **characterized in that** the energy input of the microwave radiation is at least 10 W/l.

5. Process according to Claim 1, **characterized in that** the energy input of the microwave radiation is at least 50 W/l.

6. Process according to Claim 1, **characterized in that** the energy input of the microwave radiation is preferably more than 200 W/l.

7. Process according to Claim 1, **characterized in that** the polyesterpolyols (B) are synthesized from aliphatic and/or aromatic polycarboxylic acid units and aliphatic, araliphatic and/or cycloaliphatic polyols, or optionally polyol mixtures, with molecular weights of 62 to 1000 and preferably of 62 to 400 g/mol.

8. Process according to Claim 1, **characterized in that** the polyesterpolyols (B) have number-average molecular weights of 200 to 6000 g/mol and functionalities of 1.9 to 4.5 and preferably of 1.95 to 3.5.

9. Process according to Claim 1, **characterized in that** the polyesterpolyols (B) contain carbonate groups.

10. Process for the production of foamed and non-foamed polyurethane materials using the polyesterpolyols (A) prepared by the process according to Claims 1 to 9.

## Revendications

1. Procédé pour produire des polyesterpolyols (A) **caractérisé en ce que**
a) des polyesterpolyols (B) dont la masse moléculaire moyenne en nombre est supérieure à celle du polyesterpolyol (A), sont mélangés avec des polyols (C) ayant des masses moléculaires de 62 à 1 000, de préférence de 62 à 400 g/mol, où les polyesterpolyols (B) sont différents des polyols (C), et
b) ce mélange est exposé à un rayonnement hyperfréquence.

2. Procédé selon la revendication 1 **caractérisé en ce qu'**un rayonnement hyperfréquence monomodal à champs de rayonnement hyperfréquence homogènes est utilisé.

3. Procédé selon la revendication 1 **caractérisé en ce qu'**un rayonnement hyperfréquence multimodal à champs de rayonnement hyperfréquence hétérogènes est utilisé.

4. Procédé selon la revendication 1 **caractérisé en ce que** l'apport d'énergie du rayonnement hyperfréquence est d'au moins 10 W/l.

5. Procédé selon la revendication 1 **caractérisé en ce que** l'apport d'énergie du rayonnement hyperfréquence est d'au moins 50 W/l.

6. Procédé selon la revendication 1 **caractérisé en ce que** l'apport d'énergie du rayonnement hyperfréquence est de préférence supérieur à 200 W/l.

7. Procédé selon la revendication 1 **caractérisé en ce que** les polyesterpolyols (B) sont constitués à partir d'unités de polyacides carboxyliques aliphatiques et/ou aromatiques et de polyols aliphatiques, araliphatiques et/ou cycloaliphatiques, éventuellement de mélanges de polyols ayant des masses moléculaires de 62 à 1 000, de préférence de 62 à 400 g/mol.

8. Procédé selon la revendication 1 **caractérisé en ce que** les polyesterpolyols (B) présentent des masses moléculaires moyennes en nombre de 200 à 6 000 g/mol et des fonctionnalités de 1,9 à 4,5, de préférence de 1,95 à 3,5.

9. Procédé selon la revendication 1 **caractérisé en ce que** les polyesterpolyols (B) contiennent des groupes carbonate.

10. Procédé pour produire des matériaux en polyuréthane expansés et non expansés au moyen des polyesterpolyols (A) produits selon le procédé selon les revendications 1 à 9.
